(19) Europäisches Patentamt
European Patent Office
Office européen des brevets

(11) EP 1 051 909 A1

(12) **EUROPEAN PATENT APPLICATION**

(43) Date of publication:
**15.11.2000 Bulletin 2000/46**

(51) Int. Cl.[7]: **A01N 31/16**

(21) Application number: **00303666.2**

(22) Date of filing: **02.05.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **11.05.1999 GB 9910787**

(71) Applicant: **Sorex Limited**
**Widnes, Cheshire WA8 8TJ (GB)**

(72) Inventors:
- **Hodgkinson, Dr. Leslie Charles, Dr.**
  **Runcorn, Cheshire WA7 1ES (GB)**
- **LeQuesne, Lesley Carol**
  **Widnes, Cheshire WA8 9AT (GB)**

(74) Representative:
**Wilkinson, Stephen John**
**Stevens, Hewlett & Perkins**
**1 St. Augustine's Place**
**Bristol BS1 4UD (GB)**

(54) **The treatment of pests using substituted naphthoquinones**

(57) Naphthoquinone compounds of the formula I

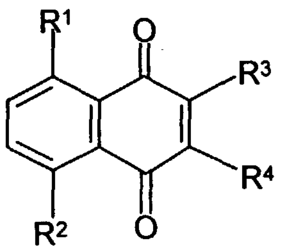

(I)

wherein $R^1$ and $R^2$ are each, independently, selected from H and OH and $R^3$ and $R^4$ are each, independently, selected from H, halo and 1-4C alkyl groups, provided that when $R^1$ and $R^2$ are each H, $R^3$ and $R^4$ cannot both be H, have use as pesticides particularly in the treatment of acarids and insects.

A pesticidal composition comprises at least one compound of the formula I together with an inert carrier.

EP 1 051 909 A1

## Description

The present invention relates to the treatment of pests using substituted naphthoquinones. More particularly, it relates to a method of treating pests, such as insects and acarids, using such substituted naphthoquinones and to compositions containing such naphthoquinones for use in the method.

DE3801743 A1 generically discloses compounds of the general formula

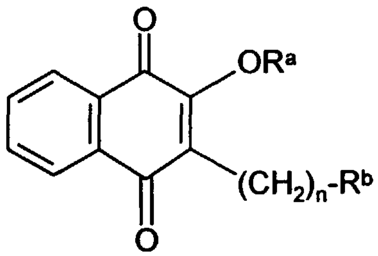

(A)

in which n is 0 to 12, $R^a$ represents hydrogen or an optionally substituted alkyl, aralkyl, alklcarbonyl, (hetero)arylcarbonyl, alkoxycarbonyl, alkylsulphonyl or arylsulphonyl group, and $R^b$ represents a haloalkyl, optionally substituted (hetero)aryl or substituted cycloalkyl group, which are said to exhibit acaricidal and fungicidal activity.

It has now been discovered that certain differently-substituted naphthoquinones possess excellent insecticidal and acaricidal activity.

Accordingly, in one aspect, the present invention provides the use of a naphthoquinone of the formula I

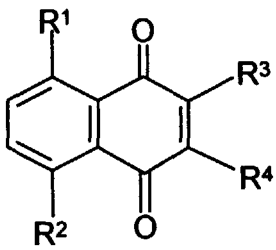

(I)

wherein $R^1$ and $R^2$ are each, independently, selected from H and OH and $R^4$ and $R^5$ are each, independently, selected from H, halo and 1-4C alkyl groups, provided that when $R^1$ and $R^2$ are each H, $R^3$ and $R^4$ cannot each be H, as a pesticide.

The present invention further provides a method of combating pests which comprises treating the pests with a pesticidally effective amount of a naphthoquinone of the formula I above. The present invention yet further provides a pesticidal composition which comprises a carrier and, as active ingredient, a naphthoquinone of the formula I above.

The substituted naphthoquinones of the formula I above have been found to exhibit excellent activity against acarids, for instance ectoparasitic mites such as <u>Psoroptes</u> <u>cuniculi</u> (rabbit ear canker mite), <u>Dermanyssus</u> <u>gallinae</u> (poultry red mite) and <u>Psoroptes</u> <u>ovis</u> (sheep scab mite) and against insects, for example <u>Musca</u> <u>domestica</u> (housefly) and <u>Blatella</u> <u>germanica</u> (German cockroach).

Of the substituted naphthoquinones of the above formula I, preferred are those in which $R^1$ and $R^2$ are each, independently, selected from H and OH and in which $R^3$ and $R^4$ are each, independently, selected from H and Cl, provided that when $R^1$ and $R^2$ are each H, at least one of $R^3$ and $R^4$ is Cl. Especially preferred compounds of the formula I, which show superior activity towards acarids and insects, are 2-chloro-1,4-naphthoquinone; 5,8-dihydroxy- 1,4-naphthoquinone; 5-hydroxy-1,4-naphthoquinone; 2,3-dichloro-1,4-naphthoquinone; and 2,3-dichloro-5,8-dihydroxy-1,4-naphthoquinone.

The substituted naphthoquinones used in the present invention may be prepared by standard preparative methods, such as by oxidation of 1,4-dihydroxynaphthalenes and subsequent substitution, if required.

The active compounds may be used in the treatment of pests with or without an appropriate carrier. We have found, for instance, that the substituted naphthoquinones, when deposited on a surface, show activity towards houseflies, cockroaches and mites which contact the surface provided with the deposit. A suitable deposit on a surface can be effected by treating the surface, to be contacted by the pests, with a solution of a substituted naphthoquinone of the formula I above in an inert, volatile solvent and then allowing the volatile solvent to evaporate to leave the deposit on

the said surface. An example of a suitable inert, volatile solvent is acetone. Thus, according to a further aspect, the present invention provides a method of combating pests, particularly houseflies, by causing the pests to contact a surface on which is provided a deposit of a substituted naphthoquinone of the formula I above. According to a preferred embodiment, the substituted naphthoquinone is selected from 2-chloro-1,4-naphthoquinone and 5-hydroxy-1,4-naphthoquinone, since these have been found to possess superior activity by contact with houseflies.

When a carrier is used in the composition of the present invention it will be an appropriate inert carrier such as corn oil or, preferably, aqueous liquid. Typically, the active compound will be used as an aqueous solution at a concentration of from 1 to 100 ppm. The composition may also be in the form of an emulsiable concentrate in oil which, when mixed with water and a suitable emulsifier, forms an oil-in-water emulsion for use as a pesticide. Such compositions may, if desired, additionally contain one or more other components, as is usual in the art, such as surface active agents, emulsifiers, antioxidants or other stabilisers, perfumes and colouring agents. The amounts of such components, when used, will be those conventionally used in the art.

EXAMPLE 1

Determination of the efficacy of test compounds vs Psoroptes cuniculi, the ear canker mite of rabbits, by laboratory assay

*P.cuniculi* mites were collected the day before the bioassay and were harvested from artificially infested New Zealand White rabbits. The scabs and mites were collected into a clean, clear glass or plastic sample tube approximately 6.0 × 2.5 cm (height × diameter), secured with a tight fitting screw-topped lid.

Mites were kept cool during transportation.

The mites were stored overnight in a refrigerator at 4°C and were revived at approximately 22°C (room temperature) for 1 hour before commencing experimentation.

A fresh 96-well, flat bottomed, polystyrene tissue culture plate (with lid) was used for the bioassay (well diameter 6.4mm).

Each test material/concentration tested was referred to as "test material ".

Two types of controls were tested, a positive control (usually the carrier of the test solution e.g., corn oil) and a negative control (usually water). Three wells, each containing 150μl of positive control and three wells, each containing 150μl of negative control were set-up using an Eppendorf microlite pipette. The same pipette tip was used for the three replicates of each control, but CLEAN tips had to be used for each different control.

Three replicate wells of 150μl of each test material to be bioassayed were set up. As with the controls, the same tip were used for each replicate, but a CLEAN tip was used for each different test material.

There were, therefore, three replicate wells of 150μl of each control and of each test material.

Adult female mites were used for the bioassay. They are the largest, darkest coloured mites, easily visible to the naked eye. Sex can be confirmed using a binocular zoom microscope (note the difference in leg length of the 4$^{th}$ pair of legs - longer in the female; also note the difference in body size, the male is much smaller).

To avoid contamination of the mite collection tube with the test materials the following technique was used for each separate test material:

1. A small amount of scab and mites was transferred from the collection tube into the base of a 5.0cm diameter petri-dish.
2. The 5.0cm dish was placed into the base of a 9.0cm diameter petri-dish to give a moated "transfer dish".
3. Ten female mites were transferred to each of the replicate wells and the time was recorded.
4. The three replicate wells were checked under the binocular zoom microscope to ensure that they each had the correct number of live, active female mites.

The controls were set up first, followed by the lowest concentration test materials and ending with the highest for any test material. Once the wells were infested with mites the lid of the tissue culture plate was put in place to prevent any evaporation of liquid and escape of mites. All wells were then examined again under binocular zoom microscope and checked to ensure that they contained the correct number of mites.

The plates were then incubated at 22°C (room temperature) for 24 hours, with assessments carried out at the intervals of 1, 2, 3, 4, 5, 6 and 24 hours after the start of the test.

Mites were assessed and scored according to the following criteria, shown in Table 1:

Table 1

| Assessment criteria for mite bioassay | | |
|---|---|---|
| CRITERIA | STATUS | SCORE |
| Active movement of all limbs | LIVE | 1 .0 |
| Weak movement of three or more limbs | MORIBUND | 0.5 |
| No movement at all | DEAD | 0.0 |

Using this method, each replicate received a score of between 0.0 and 10.0 at each assessment. The mean score was determined for the three replicates of each control or test material after 24 hours. This mean score was then used to determine the mean percentage mortality (mean %M), as follows:

$$\text{Mean \% M} = 100 - \left[\frac{\text{Observed score}}{\text{Max. score possible}} \times 100\right]$$

Control mortality should be corrected for by using Abbott's Formula:

$$\text{Adjusted \% C} = \left[\frac{\text{\% treatment - \% control}}{\text{100 - \% control}} \times 100\right]$$

The results are shown in Table 2.
The compounds tested were:

| | | |
|---|---|---|
| Compound no. | 1 | 5-hydroxy-2-methyl-1,4-naphthalene dione |
| | 2 | 2-methyl-1,4-naphthoquinone |
| | 3 | 2-chloro-1,4-naphthoquinone |
| | 4 | 5,8-dihydroxy-1,4-naphthoquinone |
| | 5 | 5-hydroxy-1,4-naphthoquinone |
| | 6 | 2-hydroxy-1,4-naphthoquinone |
| | 7 | 2,3-dichloro-1,4-naphthoquinone |
| | 8 | 2,3-dichloro-5,8-dihydroxy-1,4-naphthoquinone |

The compounds supplied for testing were solutions in water with an emulsifier, TRITON X 100 ("TX 100").

Table 2

| Screen of compounds vs Ear Canker Mite (ECM) | | | | | |
|---|---|---|---|---|---|
| Compound | 0.1 mg/ml in water +TX100, % Mortality (100ppm) | 0.025 mg/ml in water +TX100, % Mortality (25ppm) | 0.01 mg/ml in water +TX100, % Mortality (10ppm) | 0.005 mg/ml in water +TX100, % Mortality (5ppm) | 0.001 mg/ml in water +TX100, % Mortality (1ppm) |
| 1 | | | 100%,<1hr | 100%,<1 hr | 50%, 24 hrs |
| 2 | | | 40%, 24 hrs | | |

Table 2 (continued)

| Screen of compounds vs Ear Canker Mite (ECM) | | | | | |
|---|---|---|---|---|---|
| Compound | 0.1 mg/ml in water +TX100, % Mortality (100ppm) | 0.025 mg/ml in water +TX100, % Mortality (25ppm) | 0.01 mg/ml in water +TX100, % Mortality (10ppm) | 0.005 mg/ml in water +TX100, % Mortality (5ppm) | 0.001 mg/ml in water +TX100, % Mortality (1ppm) |
| 3 | | | 100%,<1 hr | 100%,<1 hr | 0%, 24 hrs |
| 4 | | | 70%, 1 hr<br>100% 24 hrs | 70%, 1 hr<br>100% 24 hrs | 20%, 24 hrs |
| 5 | | | 100%,<1 hr | 100%,<1 hr | 80%, 24 hrs |
| 6 | 100%, 24 hrs | 0%, 24 hrs | 0%, 24 hrs | | |
| 7 | | | 100%,<1 hr | 100%,<1 hr | 20%, 24 hrs |
| 8 | | | 100%,<1 hr | 100%,<1 hr | 10%, 24 hrs |

For comparison a commercial standard called "Bayticol" was included in the screen. "Bayticol" is a sheep dip containing the active ingredient flumethrin. Flumethrin technical material (TM) was bioassayed as a corn oil solution since it is insoluble in water. The results obtained from this test with the TM were 60% M at 4 mg $ml^{-1}$ (4000 ppm) a high concentration. The recommended use rate, however, when diluted as a dip is 44 ppm (0.044 mg $ml^{-1}$). During tests, it was discovered that a blank ECL (emulsifiable concentrate for livestock) formulation effected 100% M of ECM. This activity was traced to the benzoic acid in the formulation. The 0.044 mg $ml^{-1}$ (44 ppm) use rate was used as the commercial standard rate for comparison of the activity of novel compounds towards the Ear Canker Mite of rabbits.

Compound 1 was found to show high activity against ECM in the screen. Unfortunately, the compound was separately found to be phytotoxic.

Five other compounds (3, 4, 5, 7 and 8), proved to be very active against ECM, with all achieving 100% M < 1 hour (except compound 4 which achieved 100% M in 24 hours). These five compounds were then screened at 0.005 mg $ml^{-1}$ (5 ppm) - again, all except compound 4 achieved 100% M < 1 hour. Compound 4 achieved 100% M, but again in 24 hours - slower acting. At 0.001 mg $ml^{-1}$ (1 ppm) the following results were achieved (all after 24 hours):

| | |
|---|---|
| Compound 3 - 0% M;<br>Compound 5 - 80% M;<br>Compound 8 - 10% M. | Compound 4 - 20% M;<br>Compound 7 - 20% M; |

EXAMPLE 2

Determination of the efficacy of test compounds vs. Housefly (*Musca domestica*)

The housefly tests, knock-down (KD) was defined as the "inability of the fly to walk forwards in a co-ordinated way, with uncontrolled twitching or falling over and unable to right itself".

A continuous exposure deposit bioassay was carried out using, as the test compounds, the compounds 3, 4, 5, 7 and 8 as identified in Example 1 above.

Procedure 1

A glass jar was coated internally with an acetone solution of the compound to be tested. The deposit was applied evenly by rolling the jar on a roller until all the acetone had flashed off and the internal surface of the jar was dry. The internal deposit of the compound was 100 mg active ingredient per square metre (a.i.$m^{-2}$). For each compound tested, three replicate jars, each containing ten female houseflies, were set-up. The flies were left in the jars for the duration of the experiment (24 hours) i.e., continuous exposure. Control jars (acetone only) were also set-up, each with ten female houseflies.

The flies were observed for KD and M every 15 minutes for the first hour and then after 1, 2, 3, 4 and 24 hours.

Results

Compound 7 showed contact activity vs. housefly of 40% M by 24 hours. Compound 4 gave 20% KD<1 hour with 100% M by 24 hours. Compound 8 was slow acting, with 100% M achieved by 24 hours. Compounds 3 and 5 both gave rapid KD, 100% KD<1 hour followed by 100% M by 24 hours.

Procedure 2

Compounds 3, 4, 5 and 8 were then tested in a limited exposure deposit bioassay. The tests were set up exactly as in the continuous exposure deposit bioassay described above, with deposits of 100 mg a.i.$m^{-2}$ for each compound. Jars were also set up with the lower deposit rate of 20 mg a.i.$m^{-2}$ for each compound. The only difference in methodology from the continuous exposure bioassay was that the flies were only exposed to the deposits in the jars for 1 hour, after which they were removed to clean holding dishes for further observation of KD and M.

Results

100 mg a.i.$m^{-2}$ deposit: Flies appeared very agitated after 15 minutes exposure with all 4 compounds. By 1 hour compounds 3, 4, 5 and 8 had effected 100, 80, 80 and 0% KD, respectively. The flies were removed to clean holding dishes and the 24 hour mortality results were: compound 3 = 100% M, compound 4 = 60% M, compound 5 = 100% M and compound 8 = 100% M.

20 mg a.i.$m^{-2}$ deposit: Flies appeared very agitated after 15 minutes exposure with all 4 compounds. By 1 hour compounds 3, 4, 5 and 8 had effected 100, 80, 70 and 50% KD, respectively. The flies were removed to clean holding dishes and the 24 hour mortality results were: compound 3 = 100% M, compound 4 = 80% M, compound 5 = 90% M and compound 8 = 80% M.

Compounds 3 and 5 showed the highest level of activity vs. Housefly in these tests.

EXAMPLE 3

Determination of the efficacy of test compounds vs. German Cockroach (*Blattella germanica*)

The two most active compounds (3 and 5) identified in the Housefly tests (Example 2) were screened for insecticidal activity vs. German Cockroach in deposit bioassay tests. Knock-down (KD) was defined as "the inability of the cockroach to walk forward in a co-ordinated way".

A continuous exposure deposit bioassay was carried out as described in Example 2 except that ten male German cockroaches were placed in the jars instead of ten houseflies. The only compounds tested were compounds 3 and 5 as identified in Example 1.

Results

Within the first hour 100% KD was achieved with both compounds. After 24 hours exposure, both compounds gave 100% M by this method.

Procedure

A limited exposure deposit bioassay was carried out, using compounds 3 and 5, according to procedure 2 described in Example 2 (using 100 mg a.i.$m^{-2}$ deposit) except that ten male German cockroaches were placed in the jars instead of ten houseflies.

Results

Within the first hour 100% KD was achieved using both compound 3 and compound 5. However, after being removed to clean, untreated holding dishes, all cockroaches recovered with no further KD or M.

EXAMPLE 4

Deposit bioassay studies on *Dermanyssus gallinae* (Poultry Red Mite)

Procedure

A continuous exposure bioassay test was set-up as in Example 2. The methodology was the same except that 10 adult female poultry red mites were placed in each jar. Three jars were set-up for each of the following test compounds: 3, 4, 5, 7 and 8 as identified in Example 1. The deposit rate for each compound was 100 mg a.i.m$^{-2}$. Control jars were treated with acetone only.

Results

Compounds 7 and 8 showed no activity against poultry red mite by this method.
Compounds 3 and 5 effected 100% KD <1 hour. There was 100% M after 24 hours with compounds 3, 4 and 5.

EXAMPLE 5

Activity of compounds of the invention vs. *Psoroples ovis* (sheep scab mite)

The activities of compounds 3 (5 ppm and 2 ppm), 5 (10 ppm), 7 (10 ppm) and 8 (10 ppm) were investigated according to the following trials.

| | | | |
|---|---|---|---|
| 1. | Number of Samples | Test Samples<br>Positive Control (Diazinon)<br>Negative Control (Water) | Ten (10)<br>One (1)<br>One (1) |
| 2. | Number of Replicates | Three (3) | |
| 3. | Number of Mites Per Well | Between eight (8) and twelve (12) adult females | |
| 4. | Nature of Test Compounds | Aqueous solutions. | |
| 5. | Amount of Test Solution | 3ml per sample | |
| 6. | Timing of Assessments | One hour<br>Three Hours<br>Twenty four hours | (+ 1h)<br>(+ 3h) if required<br>(+ 24h) if required |

Two controls were set up, blank formulation and water.
Identical simultaneous screens were also run using the ear canker mite (*Psoroptes cuniculi*). A commercial standard for comparison purposes was DIAZINON (60% EC), tested at 10, 50, 75, 100 and 500 ppm for *P. ovis.*

Results

All results for *P. ovis* and *P. cuniculi* are shown together in Table 3 below. For comparison, the commercial standard Diazinon is normally made up at 400 ppm in the dip bath with a minimum maintenance level in the bath of 100-150 ppm.
Diazinon effected 100% M at 500 ppm, 76.1 % M at 100 ppm, 91.4% M at 75 ppm, 59.7% M at 50 ppm and only 37.5% M at 10 ppm.
Compounds 3, 5, 7 and 8, however, were active against both species of mite - giving similar results with both species. The compounds with greatest activity were compounds 5, 7 and 8 at 10 ppm - all giving 100% M with both species of mite.
This work confirmed that *P. cuniculi* was a good model to use for determining the activity of compounds vs. *P. ovis* when *P. ovis* is unavailable. Since this work was carried out, these two species have actually been reported as

being the same species of mite *(Sheep scab conference, Cardiff, 1998*).

Conclusion

The work confirmed that the compounds are specifically active against ectoparasitic mites, including the sheep scab mite (*P. ovis*) and the ear canker mite of rabbits (*P.cuniculi*).

Table 3

| Comparative activity of novel compounds vs. *P.ovis* and *P.cuniculi* | | | | | |
|---|---|---|---|---|---|
| COMPOUND | PPM | SPECIES | MEAN % MORTALITY | | |
| | | | 3 hours | 6 hours | 24 hours |
| 3 | 5 | *P.ovis* | 30.6 | 75.0 | 97.2 |
| 3 | 5 | *P.cuniculi* | 100.0 | 100.0 | 100.0 |
| 3 | 2 | *P.ovis* | 10.0 | - | 63.3 |
| 3 | 2 | *P.cuniculi* | 0.0 | - | 40.0 |
| | | | | | |
| 5 | 10 | *P.ovis* | 100.0 | - | 100.0 |
| 5 | 10 | *P.cuniculi* | 100.0 | - | 100.0 |
| | | | | | |
| 7 | 10 | *P.ovis* | 100.0 | - | 100.0 |
| 7 | 10 | *P.cuniculi* | 100.0 | - | 100.0 |
| | | | | | |
| 8 | 10 | *P.ovis* | 93.9 | - | 100.0 |
| 8 | 10 | *P.cuniculi* | 100.0 | - | 100.0 |
| | | | | | |
| BLANK | - | *P.ovis* | 0.0 | 0.0 | 10.4 |
| | - | *P.cuniculi* | 0.0 | 0.0 | 0.0 |
| WATER | - | *P.ovis* | 0.0 | 0.0 | 3.3 |
| | - | *P.cuniculi* | 0.0 | 0.0 | 0.0 |
| | | | | | |
| DIAZINON | 10 | *P.ovis* | 0.0 | 2.8 | 37.5 |
| DIAZINON | 50 | *P.ovis* | 0.0 | 2.8 | 59.7 |
| DIAZINON | 75 | *P.ovis* | 0.0 | 3.0 | 91.4 |
| DIAZINON | 100 | *P.ovis* | 0.0 | 0.0 | 76.1 |
| DIAZINON | 500 | *P.ovis* | 20.0 | 42.2 | 100.0 |

## Claims

1. The use of a naphthoquinone of the formula I

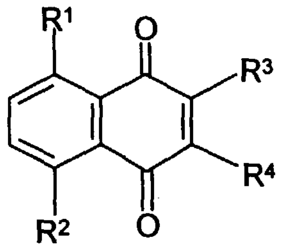

(I)

wherein $R^1$ and $R^2$ are each, independently, selected from H and OH and $R^3$ and $R^4$ are each, independently, selected from H, halo and 1-4C alkyl groups, provided that when $R^1$ and $R^2$ are each H, $R^3$ and $R^4$ cannot both be H, as a pesticide.

**2.** Use according to claim 1, wherein in formula I in which $R^1$ and $R^2$ are each, independently selected from H and OH and $R^3$ and $R^4$ are each, independently, selected from H and Cl, provided that when $R^1$ and $R^2$ are each H, at least one of $R^3$ and $R^4$ is Cl.

**3.** Use according to claim 2, wherein the naphthoquinone is selected from

2-chloro-1,4-naphthoquinone;
5,8-dihydroxy-1,4-naphthoquinone;
5-hydroxy-1,4-napthoquinone;
2,3-dichloro-1,4-naphthoquinone; and
2,3-dichloro-5,8-dihydroxy-1,4-naphthoquinone.

**4.** A method of combating pests which comprises treating the pests with a pesticidally-effective amount of a naphthoquinone of the formula I

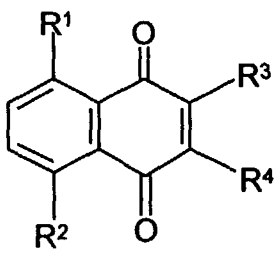

(I)

wherein $R^1$ and $R^2$ are each, independently, selected from H and OH and $R^3$ and $R^4$ are each, independently, selected from H, halo and 1-4C alkyl groups, provided that when $R^1$ and $R^2$ are each H, $R^3$ and $R^4$ cannot both be H.

**5.** A method according to claim 4, wherein the pests are selected from acarids and insects.

**6.** A method according to claim 5, wherein the pests are selected from <u>Psoroptes cuniculi</u>, <u>Dermanyssus gallinae</u>, <u>Psoroptes ovis</u>, <u>Musca domestica</u> and <u>Blatella germanica</u>.

**7.** A method according to claim 6, wherein the pest is <u>Musca domestica</u> and wherein the pest is caused to contact a surface on which is provided a deposit of a naphthoquinone of the formula I.

**8.** A method according to claim 7, wherein the naphthoquinone is selected from 2-chloro-1,4-naphthoquinone and 5-hydroxy-1,4-naphthoquinone.

**9.** A pesticidal composition comprising an inert carrier and, as active ingredient, a naphthoquinone of the formula I

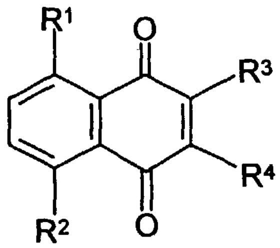

(I)

wherein $R^1$ and $R^2$ are each, independently, selected from H and OH and $R^3$ and $R^4$ are each, independently, selected from H, halo and 1-4C alkyl groups, provided that when $R^1$ and $R^2$ are each H, $R^3$ and $R^4$ cannot both be H group.

**10.** A composition according to claim 9, wherein in formula I $R^1$ and $R^2$ are each, independently selected from H and OH and $R^3$ and $R^4$ are each, independently, selected from H and Cl, provided that when $R^1$ and $R^2$ are each H, at least one of $R^3$ and $R^4$ is Cl.

**11.** A composition according to claim 10, wherein the naphthoquinone is selected from

2-chloro-1,4-naphthoquinone;
5,8-dihydroxy-1,4-naphthoquinone;
5-hydroxy-1,4-napthoquinone;
2,3-dichloro-1,4-naphthoquinone; and
2,3-dichloro-5,8-dihydroxy-1,4-naphthoquinone.

European Patent Office

# EUROPEAN SEARCH REPORT

Application Number
EP 00 30 3666

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 152 852 A (PUEHRINGER JOSEF ;MAKES FRANTISEK (SE)) 28 August 1985 (1985-08-28) * page 1, paragraph 1 * * page 6 - page 8 * | 1-11 | A01N31/16 |
| X | EP 0 244 309 A (UNIV DUKE) 4 November 1987 (1987-11-04) * claim 1 * * page 14, last paragraph * | 1-11 | |
| Y | EP 0 300 218 A (BAYER AG) 25 January 1989 (1989-01-25) * the whole document * | 1-11 | |
| Y | WO 96 21354 A (BRITISH TECH GROUP ;KHAMBAY BHUPINDER PALL SINGH (GB); BATTY DUNCA) 18 July 1996 (1996-07-18) * the whole document * | 1-11 | |
| Y | WO 97 02271 A (BRITISH TECH GROUP ;KHAMBAY BHUPINDER PALL SINGH (GB); BATTY DUNCA) 23 January 1997 (1997-01-23) * the whole document * | 1-11 | TECHNICAL FIELDS SEARCHED (Int.Cl.7) A01N |

The present search report has been drawn up for all claims

| Place of search | Date of completion of the search | Examiner |
|---|---|---|
| MUNICH | 7 June 2000 | Bertrand, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 00 30 3666

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2000

| Patent document cited in search report | Publication date | Patent family member(s) | Publication date |
|---|---|---|---|
| EP 0152852 A | 28-08-1985 | AT 59529 T | 15-01-1991 |
| | | DE 3580989 D | 07-02-1991 |
| EP 0244309 A | 04-11-1987 | US 4734282 A | 29-03-1988 |
| | | AT 85185 T | 15-02-1993 |
| | | AU 604690 B | 03-01-1991 |
| | | AU 7154987 A | 29-10-1987 |
| | | BR 8701935 A | 02-02-1988 |
| | | CA 1274772 A | 02-10-1990 |
| | | DE 3783937 A | 18-03-1993 |
| | | DE 3783937 T | 05-08-1993 |
| | | ES 2053573 T | 01-08-1994 |
| | | JP 62294601 A | 22-12-1987 |
| | | KR 9506921 B | 26-06-1995 |
| | | MX 166147 B | 22-12-1992 |
| | | PH 25272 A | 30-04-1991 |
| | | PT 84750 A,B | 01-05-1987 |
| | | ZA 8702889 A | 15-10-1987 |
| EP 0300218 A | 25-01-1989 | DE 3801743 A | 19-01-1989 |
| | | AU 1873188 A | 05-01-1989 |
| | | BR 8803292 A | 17-01-1989 |
| | | HU 47369 A | 28-03-1989 |
| | | JP 1061440 A | 08-03-1989 |
| | | US 4929642 A | 29-05-1990 |
| | | US 4970328 A | 13-11-1990 |
| | | ZA 8804730 A | 29-03-1989 |
| WO 9621354 A | 18-07-1996 | AT 181481 T | 15-07-1999 |
| | | AU 699685 B | 10-12-1998 |
| | | AU 4352496 A | 31-07-1996 |
| | | AU 699011 B | 19-11-1998 |
| | | AU 4352596 A | 31-07-1996 |
| | | BR 9606742 A | 30-12-1997 |
| | | BR 9606744 A | 30-12-1997 |
| | | CA 2209906 A | 18-07-1996 |
| | | CA 2209998 A | 18-07-1996 |
| | | CZ 9702141 A | 17-12-1997 |
| | | CZ 9702142 A | 17-12-1997 |
| | | DE 69603010 D | 29-07-1999 |
| | | DE 69603010 T | 28-10-1999 |
| | | EP 0802729 A | 29-10-1997 |
| | | EP 0802730 A | 29-10-1997 |
| | | ES 2133922 T | 16-09-1999 |
| | | WO 9621355 A | 18-07-1996 |
| | | GR 3030768 T | 30-11-1999 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 00 30 3666

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2000

| Patent document cited in search report | Publication date | Patent family member(s) | Publication date |
|---|---|---|---|
| WO 9621354 A | | HU 9702397 A | 30-03-1998 |
| | | JP 10511976 T | 17-11-1998 |
| | | JP 10513439 T | 22-12-1998 |
| | | NZ 298117 A | 24-09-1998 |
| | | PL 321274 A | 24-11-1997 |
| | | PL 321290 A | 24-11-1997 |
| | | SK 90597 A | 10-12-1997 |
| | | SK 90697 A | 10-12-1997 |
| | | US 5962002 A | 05-10-1999 |
| | | US 6043286 A | 28-03-2000 |
| WO 9702271 A | 23-01-1997 | AU 704665 B | 29-04-1999 |
| | | AU 6313896 A | 05-02-1997 |
| | | BR 9609639 A | 30-03-1999 |
| | | CA 2226089 A | 23-01-1997 |
| | | CN 1193976 A | 23-09-1998 |
| | | CZ 9800001 A | 17-06-1998 |
| | | EP 0850239 A | 01-07-1998 |
| | | JP 11508585 T | 27-07-1999 |
| | | NO 980010 A | 04-03-1998 |
| | | NZ 311758 A | 28-10-1999 |
| | | PL 324408 A | 25-05-1998 |
| | | SK 179897 A | 08-07-1998 |

EPO FORM P0459

For more details about this annex : see Official Journal of the European Patent Office, No. 12/82